(19) Europäisches Patentamt
European Patent Office
Office européen des brevets

(11) Publication number: 0 296 505 A1

(12) # EUROPEAN PATENT APPLICATION

(21) Application number: 88109716.6

(22) Date of filing: 17.06.88

(51) Int. Cl.⁴: C08J 3/04 , C08G 69/48 , C09J 3/00 , C09D 3/00

(30) Priority: 22.06.87 US 65222

(43) Date of publication of application: 28.12.88 Bulletin 88/52

(84) Designated Contracting States: AT BE CH DE ES FR GB IT LI NL SE

(71) Applicant: HENKEL CORPORATION
300 Brookside Avenue
Ambler Pennsylvania 19002(US)

(72) Inventor: Lovald, Roger A.
1738 Wildwood Lane
Darien, Ill. 60559(US)
Inventor: Whyzmuzis, Paul D.
29 W251, Wagner Road
Naperville, Ill. 60565(US)
Inventor: Toonen, James E.
2408 Friendship Lane
Burnsville, MN 55337(US)

(74) Representative: von Kreisler, Alek, Dipl.-Chem. et al
Patentanwälte Von Kreisler-Selting-Werner
Deichmannhaus am Hauptbahnhof
D-5000 Köln 1(DE)

(54) **Aqueous compositions containing a polymeric fat acid polyamide.**

(57) Aqueous compositions containing polymeric fat acid polyamide resins are disclosed and their use in coatings and adhesives. The polyamide resins are dispersed or dissolved in aqueous solutions containing alkylaminoalalkanolamines, such as N,N-dimethyl or diethyl ethanolamine in an amount sufficient to form a salt with the acid group of the polyamide resin. The thermoplastic, hot melt, polymeric fat acid polyamides are useful as adhesives in a process of bonding substrates wherein the aqueous solution of the polyamide is applied on a wet film to at least one of the substrates to be bonded, removing the water, heating the polyamide above its melting point and cooling the polyamide after contact of the substrate to be bonded.

EP 0 296 505 A1

# AQUEOUS COMPOSITIONS CONTAINING A POLYMERIC FAT ACID POLYAMIDE

## BACKGROUND OF THE INVENTION

### Field of the Invention

This invention relates to aqueous compositions containing thermoplastic polymeric fat acid polyamide resins, particularly aqeuous dispersions or solutions of such polyamide resins, useful as coatings or adhesives. The invention also relates to a novel method of adhesively bonding substrates in which a solid thermoplastic hot melt polymeric fat acid polyamide adhesive is interposed between the substrates to be bonded in which the improvement comprises applying to at least one of the substrates to be bonded, an aqueous composition containing said polyamide adhesive, and a sufficient amount of an alkanolamine to solubilize said polyamide.

### Background Information

Polyamide resins prepared from dimeric and/or higher polymeric fatty acids in uses requiring dispersion or dissolution thereof, whether as a coating, ink or adhesive, generally required dissolution or dispersion in volatile organic solvents, such as lower alkanols. Environmental concerns over the amounts of volatile organic solvents in the atmosphere has led to the use of aqueous solutions that have less volatile organic solvents contained therein. The presence of such organic solvents when working with polymeric fat acid polyamide has up to now not been capable of complete elimination. An example of this is seen in U.S. Patent 3,776,865 to Glaser and Lovald, in which water reducibility of alcohol solution polymeric fat acid polyamide resins was achieved in flexographic inks. This was achieved by the use of a specific amine component which included isophorone diamine and acid termination of the polyamide resin. This provided for a reduction of emissions of volatile organic alcohol solvents, but not complete elimination thereof.

As attempts to substantially completely eliminate the presence of volatile organic solvents from flexographic inks, resort was made to the use of non-polymeric fat acid polyamide resins. One such attempt can be seen in commonly assigned co-pending U.S. application Serial No. 853,090 filed April 17, 1986 (attor ney docket 4360A), which is in turn a Continuation-in-Part application of Serial No. 701,903 filed February 15, 1985 (attorney docket 4360). Such application dealt with flexographic ink binders having improved water solubility, in which the polyamide resins used as the binders were essentially free from dimer or higher polymeric fat acids. The water solubility was achieved by a mixture of a medium chain (12-16 carbons) and a short chain (2-10 carbons) aliphatic dicarboxylic acid with an excess of the acid component so as to provide an acid termination i.e. acid value greater than 30 and exceeding the amine value by at least 20. The aqueous solvent solution contained organic amine such as dialkylalkanolamine which provided for solubilization of the polyamide.

In another commonly assigned copending application, Serial No. 811,209 filed December 20, 1985 (attorney docket 4517), polyamide resins from aromatic acids where also found to possess improved water solubility in which the aqueous solvent contained a dialkylalkanol amine and a little alcohol such as propanol. The polyamide resins in such application employed an acid to amine ratio so as to provide an acid value greater than 35.

In commonly assigned U.S. Patent 4,508,868 polyamide resins of polymeric fat acid were employed as flexographic ink binders which provided for reduced solvent emission. Such reduced emission levels were achieved by providing higher solids levels of concentration of the resins in alcohol solvents which contained a mixture of various organic solvents. The resins were prepared using an excess of acid equivalent to amine equivalents i.e. a ratio of acid to amine of about 1.04-1.09.

## SUMMARY OF THE INVENTION

It has now been found that acid terminated polyamides prepared from polymeric fat acids can be provided which are soluble in aqueous solvents containing an alkanolamine, more specifically a dialkylalkanolamine. In such a case, none of the conventional alcohol solvents such as ethanol or propanol need be employed. It was also found that a mixture of different dialkylalkanolamines is preferred, such as a mixture of diethylethanol amine and dimethylalkanolamine.

It was also discovered that not only are such aqueous solutions or dispersions of the polymeric fat acid polyamide resins useful for application as coatings or flexographic inks, but such may be employed as thermoplastic hot melt adhesives, taking advantage of the ease in applying the adhesive to the substrate or substrates to be bonded. Thus, the aqueous dispersion or solution of the thermoplastic, hot melt, polymeric fat acid polyamide resin can be coated on at least one of the substrates to be bonded, the solvent mixture removed and heating the adhesive through which the substrates will be bonded and cooling the substrates structure with the adhesive, thereby providing an article of two substrates bonded together with an interposed layer of the polymeric fat acid thermoplastic, hot melt adhesive.

## DETAILED DESCRIPTION

As indicated earlier, the present invention deals with aqueous compositions containing certain thermoplastic polyamide resins of polymeric fat acids wherein the polymeric fat acid polyamide resin is dissolved or dispersed in water containing an alkanolamine, more specifically a dialkylalkanolamine. The polyamide contains acid groups capable of forming a salt with the dialkylalkanolamine which helps render the polyamide dispersible or soluble in the water

The polyamide itself is thermopastic. By "thermoplastic" is meant the resin is solid at ambient room temperatures, i.e. about 70°F, but at elevated temperatures will soften or fuse and again harden to a solid when cooled back to room temperature. Because of their thermoplastic nature, the resins are suitable for use as hot melt adhesives. Also because of their solid nature at room temperature, the polyamide resins are suitable for use as a coating.

The polyamide resins suitable for forming aqueous compositions of this invention are those having acid groups therein capable of forming salt groups with the dialkylalkanolamine contained in the water. The dialkylalkanolamine is employed in an amount such that an azeotropic mixture with water is achieved. Thus, the polyamide resin need not be highly acid terminated, but contain sufficient acid groups to aid solubilization of the resin by forming a salt with the dialkylalkanolamine. The amount of acid or amine groups present in the polyamide is defined by the acid and/or amine values of the resin as determined by conventional tritation methods. The amine or acid values or numbers are expressed as the milligrams of KOH equivalent to the amine or acid present per gram of sample. Particularly where the polyamide resin is to be used in adhesively bonding of substrates, substantially neutral polyamides having a relatively high molecular weight are suitable. By "neutral" polyamide is meant one having substantially equal acid and amine values in contrast to "acid terminated" wherein the acid value exceeds the amine value or "amine terminated" wherein the amine value exceeds the acid value. Thus, the polyamide will contain sufficient acid or carboxyl groups to be soluble or dispersible in water containing the dialkylalkanolamine, but need not be highly acid terminated. In general, the desirable poly amide resins will be those having an acid value as little as about 10, i.e. 8-12, with amine values below the acid value, preferably as low as possible, i.e. 1-5. However, polyamide resins which are higher in acid value, i.e. on the order to 30, or as high as 50 and exceed the amine value by as high as 20 units are satisfactory provided the resin is a solid at ambient room temperature, i.e. 21-23°C. to provide a satisfactory coating or adhesive.

The polyamide resin is desirably solubilized in the water-dialkylalkanolamine solvent by adding the desired weight of polyamide resin to the solvent and heating the mixture to an elevated temperature, about 120°C. and preferably 100°C., while stirring with agitation until the resin is dissolved. Upon cooling to ambient room temperature, the aqueous composition gels; however, the gel is readily and easily refluidized by heating the gel to 100-180°F. The exact temperatures employed in preparing the aqueous solution will depend largely on the nature of the specific polyamide resin, particularly their softening or melting point and percent solids. While the temperature need not be raised to the softening point, generally, the higher the softening point, the higher the temperature of solution will need to be. For the purposes of this invention, temperatures from about 120-195°C. will be required to initially solubilize the resin in the water containing

the dialkylalkanolamine. For refluidizing after forming a gel or cooling from the initial temperature of dissolution temperatures above 100° F. on the order of about 110-180° F., generally 110-160° F., will be required and gelling will be resisted provided the solution is maintained under agitation.

The concentration of resin in the water can vary widely and any concentration by weight up to about 35% can easily be prepared. Generally, solutions having a 10-30%, and more desirably 15-25% are used for coating or adhesively bonding appliations; with about a 20% concentration level being most generally employed.

The water solution of the polyamide resin provides an alternative method of application to a substrate in lieu of organic solutions generally employed such as alcohol solutions, or a 100% solids melt application at elevated temperatures above the softening point of the resin. When the aqueous composition is applied as a wet film to a substrate and the water with the dialkylalkanolamines is removed from the wet film generally by evaporation at room temperature, a clear, dry film of the polyamide resin will remain. As the polyamide resin is a thermoplastic material, the film of resin can be activated at anytime by the application of heat sufficient to melt the polyamide resin, which accordingly permits for use as a thermoplastic, hot melt adhesive in which two substrates are bonded together by an interposed layer of the polyamide resin.

Accordingly, the present invention is an improvement in a process of adhesively bonding substrates which comprises interposing an adhesive between the substrates to be bonded. The improvement lies in applying the thermopastic adhesives of the present invention from an aqueous solution thereof containing a dialkylalkanolamine to at least one of the substrates and wherein the acid number of said thermoplastic polyamide exceeds the amine value and is about 10 or greater. The film of resin applied to the substrate is activated in the usual manner by heating to slightly above the softening point of the polyamide adhesive, which on cooling provides a bond between the two substrates bonded together.

The aqueous solution contains the dialkylalkanolamine which permits for the solubilization of the polyamide resin. The dialkylalkanolamine useful in this invention may be defined by the formula

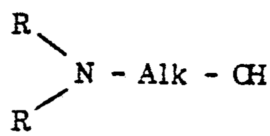

where R is an alkyl group containing about 1-6 carbon atoms and each R may be the same or different and Alk is an alkylene group containing 2-6 carbon atoms. Preferably, the R groups will contain from 1-3 carbon atoms such as methyl, ethyl or propyl and the alkylene group is an ethylene group or propylene group. The preferred dialkylalkanolamine compounds are dimethylethanolamine and diethylethanolamine. The dialkylalkanolamines should be present in an amount sufficient to solubilize the resin and to form an azeotropic mixture with water. Accordingly, the concentration of the dialkylalkanolamines in the water depends on the concentration required to give an azeotropic mixture. Generally, the water will contain about 20-26% by weight of the dialkylalkanolamine, with about 22 to 24 being preferred.

While only a single dialkylalkanolamine may be employed, mixtures thereof have been found to be particularly useful such as a mixture of N,N-diethylethanolamine and N,N-dimethylethanolamine, preferably with the diethyl compound predominating as the major component. An especially suitable aqueous solution of dialkylalkanolamines for use with a polyamide resin having an acid value of about 10 is a solvent blend composed by weight of 77.1% water, 21.8% N,N-diethylethanolamine and 1.1% dimethylethanolamine.

As indicated, the polyamide resins useful in this invention are those prepared from polymeric fat acids and various diamines and which are solid or semi-solid at ambient room temperatures. Illustrative of the range of such polyamides and the polymeric fat acids from which they are prepared, are those described in U.S. Patent 3,582,507 or 3,483,237.

As described therein, the polyamides are prepared by reacting the acid components with the diamine components at temperatures in the range of 100 to 300° C. with removal of the water of reaction (or the alcohol, if esters are employed). In general, at the beginning of the reaction it is desirable to use a temperature above 120° C. and preferably above 150° C. to 180° C., with the final temperature of reaction usually above 200° C., preferably about 250° C. The reaction is generally completed in about 1-8 hours dependent on the temperatures employed, with about 2-4 hours at temperatures above 200° C. Substantially equivalent amounts of the acid and amine components are employed, though a relatively small excess of the acidic reactant is employed to provide a product in which the acid value exceeds the amine value and has an acid value on the order of about 10 or higher. If a relatively long product molecule is to be achieved, substantially equivalent amounts of reactants must be employed, however. This does not mean in

practice that it will be necessary to have the amine and acidic reactants present in exactly equivalent amounts initially, as a portion of any excess diamine or acidic reactant may be eliminated by volatilization or otherwise during the course of the reaction, but it is desirable that the ratio of the radicals derived from the acidic components are almost exactly equivalent in the final product.

Polymeric fat acids are well-known and commercially available. One method of preparing polymeric fat acids can be found in U.S. Patent 3,157,681. As used herein the term "polymeric fat acid" refers to a polymerized "fat acid". The term "fat acid" as used herein referes to naturally occurring and synthetic monobasic aliphatic acids having hydrocarbon chains of 8 to 24 carbon atoms. The term "fat acids", therefore, includes saturated, ethylenically unsaturated and acetylenically unsaturated fatty acids. "Polymeric fat radical" is generic to the divalent, trivalent and polyvalent hydrocarbon radicals of dimerized fat acids, trimerized fat acids and higher polymers of fat acids, respectively. These divalent and trivalent radicals are referred to herein as "dimeric fat radical" and "trimeric fat radical", which may be illustrated by the formulae:

$$HOOC-D-COOH$$

and

$$HOOC-\underset{\displaystyle COOH}{\underset{|}{T}}-COOH$$

where D is the divalent hydrocarbon radical of a dimeric dicarboxylic acid and T is the trivalent hydrocarbon radical of a trimeric tricarboxylic acid. In commercially available products, the polymeric fat acid is generally prepared from 18 carbon unsaturated fatty acids such as oleic and linoleic or mixtures thereof providing a dimeric acid containing 36 carbon atoms (D contains 34 carbon atoms) and a trimeric acid containing 54 carbon atoms (T containing 51 carbon atoms).

Because saturated acids are difficult to polymerize and would provide generally low yields of polymeric fat acids, saturated fat acids which include branched and straight acids such as caprylic acid, pelargonic acid, capric acid, lauric acid, myristic acid, palmitic acid, isopalmitic acid, stearic acid, arachidic acid, behenic acid and lignoceric acid, are not currently commercially significant, such as 10-undecynoic acid, tariric acid, stearolic acid, behenolic acid and isamic acid.

The ethylenically unsaturated acids are much more readily polymerized and are more readily available. Catalytic or non-catalytic polymerization techniques can be employed. The non-catalytic polymerization generally requires a higher temperature. Suitable catalysts for the polymerization include acid or alkaline clays, di-t-butyl peroxide, boron trifluoride and other Lewis acids, antraquinone, sulfur dioxide and the like. Suitable monomers include the branched or straight chain, poly- and mono-ethylenically unsaturated acid such as 3-octenoic acid, 11-dodecenoic acid, linderic acid, lauroleic acid, myristoleic acid, tsuzuic acid, palmitoleic acid, petroselinic acid, oleic acid, elaidic acid, vaccenic acid, gadoleic acid, cetoleic acid, nervonic acid, linoleic acid, linolenic acid, eleosteric acid, hiragonic acid, moroctic acid, timnodimic acid, eicosatetraenoic acid, nisinic acid, scoliodonic acid and chaulmoogric acid.

Because of their ready availability and relative ease of polymerization, oleic and linoleic acids are the preferred starting materials for the preparation of the polymeric fat acids. Mixtures of these two acids are found in tall oil fatty acids and, accordingly, commerical tall oil fatty acids are the common source for preparing the polymeric fat acids.

Having obtained the polymeric fat acids or derivatives as described above, they may then be fractionated, for example, by conventional techniques of distillation or solvent extraction. They may be hydrogenated (before or after distillation) to reduce unsaturation under hydrogen pressure in the presence of a hydrogenation catalyst.

Typical compositions of polymeric fat acids, based on unsaturated $C_{18}$ tall oil fatty acids, which are the starting materials for the polyamides employed in the present invention, are:

$C_{18}$ monobasic acids ("monomer") 0-10% by weight;

$C_{36}$ dibasic acids ("dimer") 70-99.5% by weight;

$C_{54}$ (and higher) ("trimer") polybasic acids 0.2-20% by weight.

The dimer rich fractions (80% and above) are the most desirable, and the preferred starting acids are those containing a dimer acid content of greater than 85% and greater than 90% being the most preferred, by weight, which are obtained generally by high vacuum distillation or solvent extraction techniques. The relative ratios of monomer, dimer and trimer (or higher) in unfractionated polymeric fat acids are dependent

on the nature of the starting materials and the conditions of polymerization. As is apparent, small amounts of monomeric monocarboxylic acids may be present in the available polymeric fat acids which are, accordingly, a mixture of monomeric, dimeric and trimeric or higher polymeric forms. Accordingly, there is generally present therein some monomeric monocarboxylic acids which contain from 8 to 22 carbon atoms. Other monocarboxylic acids might be present by addition, such as acetic acid, propionic acid and the like. In general, these acids are monomeric, aliphatic hydrocarbon, monocarboxylic acids having from 2 to 22 carbon atoms.

For the purposes of this invention, unless otherwise specified, the "monomeric" (M), "dimeric" (D) and "trimeric" (T) fat acids, were determined by gas liquid chromatography of the corresponding methyl esters. In such method an "intermediate" (I) fraction between monomer and dimer is observed. In this method of analysis, the dimeric fat acid content reported is slightly lower than that found by an earlier micromolecular distillation method, which is described in Paschke, R.F., et al., J. Am. Oil. Chem. Soc. XXXI (No. 1), 5 (1954), wherein the distillation is carried out under higher vacuum (below 5 microns) and the monomeric fraction is calculated from the weight of product distilling at 155° C., the dimeric fraction is calculated from that distilling between 155° C. and 250° C., and the trimeric (or higher) fraction is calculated based on the residue.

The polyamide resins are prepared from the polymeric fat by reaction with various difunctional amine compounds, such as diamines. The resin may include other copolymerizing acid reactants and a single diamine or a mixture thereof with another copolymerizing amine reactant may be employed.

The difunctional amine compound may be aliphatic, cycloaliphatic, araliphatic and aromatic, including heterocyclic compounds. The compounds may be represented by the formula:

$H_2N - R' - NH_2$

where R′ is an aliphatic, cycloaliphatic, araliphatic or aromatic hydrocarbon group containing 2-36 carbon atoms, and may be straight or branched chain. Preferably R′ is an alkylene radical having from 2 to 12 carbon atoms. Illustrative of the diamines which may be employed are 1,2-diaminoethane, 1,3-diaminopropane, 1,4-diaminobutane, 1,6-diaminohexane, 1,10-diaminodecane, 1,12-diaminododecane, 1,18-diaminooctadecane, bis(aminomethyl) benzene, bis(aminoethyl) benzene, cyclohexyl bis(methylamine), isophorone diamine, xylylene diamine, methylene dianiline, and the diamine of a dimeric fat acid, often referred to as dimer diamine. In the dimer diamine prepared from a polymerized $C_{18}$ acid such as oleic or linoleic acid, or mixtures thereof found in tall oil fatty acids, R′ will contain 36 carbon atoms. In addition, R′ may be branched as in 3,4-diethyl-1,6-diaminohexane, 3-methyl-1,8-diamino-octane, 2-nonyl-1,10-diaminodecane and 2-octyl-1,11-diaminoundecane.

Diamines in which a hydrocarbon group such as R′ are interrupted by oxygen atoms in the chain, which are referred to as ether diamines or polyether diamine, may also be employed and can be represented by the general formula

$$H_2N - \overset{R^1}{\overset{|}{C}}HCH_2 - (O - CH_2 - \overset{R^1}{\overset{|}{C}}H)_m - NH_2$$

where $R^1$ is hydrogen or a methyl group and m is a positive integer such that the average molecular weight of the polyether diamine is between about 190 and about 3000, more preferably about 400 and 2000. Representative examples of these polyether diamines are available from the Texaco Development Corporation under the trademark "Jeffamine". A particularly useful polyether diamine commercially available is Jeffamine D-2000, wherein $R^1$ is a methyl group and m is selected such that the average molecular weight is about 2000, when m is about 33.

Heterocyclic amines such as piperazine or piperidyl compounds may also be employed, and may be defined by the general formula

$YN \langle Z \rangle NH$

where Z is selected from the group consisting of

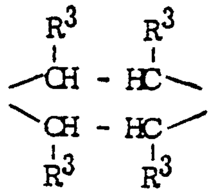

or

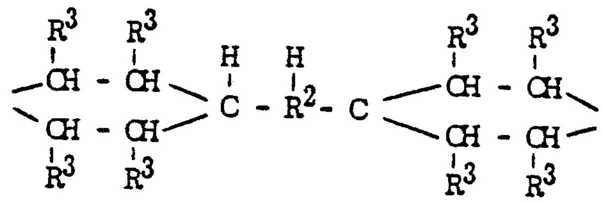

where $R^2$ is a divalent aliphatic hydrocarbon radical having at least 1 carbon atom, generally not exceeding 6 carbon atoms and $R^3$ is hydrogen or an alkyl group having 1-6 carbon atoms, generally methyl, Y is selected from the group of hydrogen and $R^4NH_2$, where $R^4$ is a divalent alkylene group having 1-6 carbon atoms. Suitable available materials corresponding to the formula YNZNH include piperazine, 1,3-di(4-piperidyl) propane, 1,2-di-4-piperidylethane and 1,4-di-4-piperidylbutane.

The copolymerizing acids generally employed are aliphatic, cycloaliphatic or aromatic dicarboxylic acids. These may be ideally defined by the formula:

$R^6OOC - R^5 - COOR^6$

where $R^5$ is an aliphatic, cycloaliphatic, araliphatic or aromatic hydrocarbon radical having from 2 to 20 carbon atoms and $R^6$ is hydrogen or a lower aliphatic hydrocarbon radical having from 1 to 8 carbon atoms such as the alkyl groups, methyl, ethyl, propyl, butyl, hexyl and octyl. The preferred range of these acids is where $R^5$ is a divalent alkylene radical having from 2 to 8 carbon atoms. Illustrative acids are adipic, succinic, glutaric, pimelic, suberic, azelaic, sebacic, terephthalic, isophthalic, cyclohexane dicarboxylic acid, cyclohexane diacetic acid and the like.

The invention can best be illustrated by the following examples, in which all parts and percentages are by weight, unless otherwise noted. In the examples to follow, the polyamide resins were prepared by charging the acid and amine reactants to a reactor along with about 1% of an 85% solution of phosphoric acid. The reaction mixture was heated to a temperature within 210-250° C. and maintained at the temperature for 1 to 2.5 hours, the last 0.5-1 hour being under vacuum. The acid to amine ratio of the reactants employed is adjusted, so as to provide an acid number exceeding the amine number, with an acid number of at least about 10.

## EXAMPLE I

Three polyamide resins were prepared using the typical preparation described. The resins were prepared employing the dicarboxylic acids and difunctional amines indicated

| Reactant | Resin A Parts | Resin B Parts | Resin B' Parts |
| --- | --- | --- | --- |
| Polymerized Tall Oil Fatty Acids* | 100 | 100 | 100 |
| Azelaic Acid | 15.1 | 28.6 | 28 |
| Jeffamine® D-2000 | 25.2 | - | - |
| Piperazine (65% concentration) | 15.9 | 32.4 | 33.5 |
| Ethylene Diamine | 6.8 | 5 | 5.3 |

* Typical analysis 1.5% M (max); 3.5% I (max); 90.0% D (min) and 5.0% T (max)

Resins A and B above had an acid number of about 10 and an amine number of 1-2. Resin B′ was the reverse, with an amine number of about 10 and an acid value of 1-2.

## EXAMPLE II

The water solubility of the resins of Example I was evaluated in boiling water, ammoniacal water and in water containing an alkanolamine.

Each of the resins A, B, and B′ were untouched by boiling water and ammoniacal water. In an aqueous solvent containing 77.1% by weight water, 21.8% N,N-diethylethanolamine and 1.1% N,N-dimethylethanolamine, 20% solution of resins A and B were prepared by heating the aqueous solvent blend and resin to 70 C. with stirring until resin particles could not be seen in the solutions, which appear as translucent to opaque solutions or colloidal dispersions. The solutions stay fluid with continuous stirring (shear) or a constant temperature of 110-115°F. Upon cooling to room temperature, the solutions gel to a semi-solid but again become fluid with heat (110-115°F.) or shear from stirring and pumping. The solutions are accordingly thixotropic. Resin A at concentrations of 5-25% in the aqueous solvent had a gel point of<80°F. on cooling with agitation, whereas the gel point was 130°F. at 90% concentration and 160°F. at 35%.

In contrast to the solubilizing of resins A and B, which have an acid number of about 10 and amine value of 1-2, resin B′ remains essentially untouched and could not be solubilized in the aqueous alkanolamine solvent blend.

## EXAMPLE III

The aqueous solutions of resins A and B prepared as in Example II were spread as a coating on glass plated substrates. When dry, the coating was a continuous clear film.

EXAMPLE IV

The aqueous solutions of resins A and B of Example II are employed in adhesive bonding of substrates in the same manner as solid thermoplastic, hot melt adhesives are employed by application of such adhesive from organic solvent solutions thereof. In such bonding applications, a wet film of the aqueous solvent blend containing the resin is applied to at least one of the substrates to be bonded and the water removed from the wet film, usually by air drying, although elevated temperatures may be employed. Upon drying, a substantially clear film of the polyamide resin adhesive results. The adhesive is activated by heating to a temperature sufficient to melt the adhesive and upon contact of the two substrates and cooling below the melting point of the adhesive, an article results of two substrates bonded together with an interposed layer or film of the adhesive therebetween.

Mechanically, only one of the substrates to be bonded need have the film of the adhesive applied thereto. However, in some instances it is desirable to apply the wet film of adhesive in the aqueous blend applied to each of the substrates, in which case each substrate will on drying have a clear film of adhesive coated and bonded thereto. When the two substrates are contacted with their adhesive layer films in contact to each other, and heat is applied to the adhesive film melt and fuse together again to provide an article of two substrates bonded together with an interposed adhesive layer.

The foregoing, accordingly, can be described as an improved method of adhesively bonding substrates in which a solid thermoplastic, hot melt adhesive is interposed between a first substrate and another (second) substrate to be bonded, wherein the improvement comprises said thermoplastic hot melt adhesive is a polymeric fat acid polyamide having an acid number of at least about 10 which exceeds the amine number and which adhesive is applied to at least one of the substrates to be bonded by applying an aqueous solution of said polyamide in water containing an alkanolamine in a sufficient amount to solubilize said polyamide in said aqueous solution.

In its most detailed aspect, the process of adhesively bonding of the present invention can be described as comprising

(a) dissolving in an aqueous solution containing a dialkylaminoalkanol in which the alkyl group and alkane group contain from about 1-4 carbon atoms a thermoplastic, polymeric fat acid polyamide hot melt adhesive having an acid value from at least about 10 which exceeds the amine value of said polyamide resin;

(b) applying said aqueous solution containing said adhesive to at least one of the substrates to be bonded, thereby providing a first substrate having an applied wet film thereon;

(c) removing the water from said wet film to provide a substantially clear, dry film of said adhesive on said substrate;

(d) activating said adhesive by heating to a temperature sufficient to melt said adhesive; and

(e) contacting said first substrate containing said melted film to a second substrate, thereby bonding said substrates together on cooling of the melted adhesive below the melting point of said adhesive.

## Claims

1. An aqueous composition comprising a thermoplastic polymeric fat acid polyamide having an acid number of about 10 or higher and which exceeds the amine number, dispersed in water containing an azeotropic level of an alkylalkanolamine which forms a salt with the acid groups of said polyamide thereby aiding solubilization of said polyamide in the water.

2. An aqueous composition as defined in claim 1 in which said polymeric fat acid polyamide has an acid number of about 10 and an amine number of 1 to 2.

3. An aqueous composition as defined in claim 1 in which said polymeric fat acid polyamide is present in said aqueous composition in an amount of up to about 35% by weight of said aqueous composition.

4. An aqueous composition as defined in claim 3 in which said polyamide is present in an amount of about 20% by weight of said aqueous composition.

5. An aqueous composition as defined in claim 1 in which said alkylalkanolamine has the formula

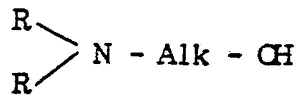

where R is an alkyl group having from 1-6 carbon atoms and Alk is an alkylene group having 2-6 carbon atoms.

6. An aqueous composition as defined in claim 1 in which said alkylalkanolamine is selected from the group consisting of N,N-dimethylethanolamine, N,N-diethylethanolamine and mixtures thereof.

7. An aqueous composition as defined in claim 1 wherein said aqueous solution containing said alkylaminoalkanol amine comprises by weight about 77% water, about 22% N,N-diethylethanolamine and about 1% N,N-dimethylethanolamine.

8. An aqueous composition as defined in claim 1 wherein said polyamide is the amidification product of a polymeric fat acid having a dimeric fat acid content greater than 70% by weight and a diamine.

9. An aqueous composition as defined in claim 1 wherein said diamine is selected from the group consisting of

(a) $H_2N-R'-NH_2$

(b) 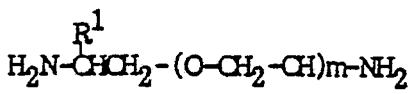

(c) 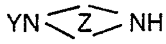

and (d) mixtures thereof

wherein R′ is an aliphatic, cycloaliphatic, araliphatic or aromatic hydrocarbon group containing 2-36 carbon atoms, $R^1$ is hydrogen or a methyl group and m is a positive integer such that the molecular weight of the polyether diamine is between about 190 and 3000, Z is selected from the group consisting of

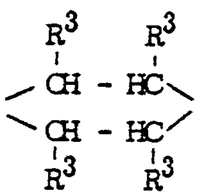

or

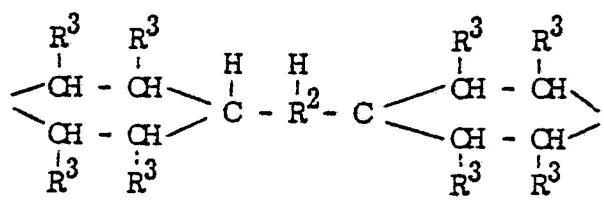

wherein $R^2$ is a divalent aliphatic hydrocarbon radical having 1-6 carbon atoms, $R^3$ is hydrogen or an alkyl group having 1-6 carbon atoms, Y is hydrogen or $R^4NH$ where $R^4$ is a divalent alkylene group having 1-6 carbon atoms.

10. An aqueous composition as defined in claim 1 in which said polymeric fat acid polyamide is the amidification reaction product of

(a) an acid component comprised of a mixture of polymerized tall oil fatty acids and azelaic acid and (b) an amine component comprised of a mixture of

(i) ethylene diamine

(ii) piperazine

and (iii) a polyetherdiamine of the formula

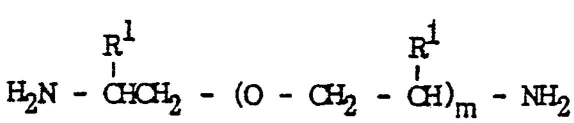

where $R^1$ is methyl and m is a positive integer of about 33.

11. An aqueous composition as defined in claim 1 in which said polymeric fat acid polyamide is the amidification product of

(a) an acid component comprised of polymerized tall oil fatty acids and azelaic acid

and (b) an amine component comprised of a mixture of ethylene diamine and piperazine

12. In a process of adhesively bonding substrates which comprises interposing a thermoplastic adhesive between the substrates to be bonded the improvement wherein said thermoplastic adhesive is a polymeric fat acid polyamide having an acid number of at least about 10 which exceeds the amine number of said polyamide and wherein said adhesive is applied to at least one of the substrates to be bonded as a wet film said polyamide from an aqueous solution containing an alkylaminoalkanol amine of the formula

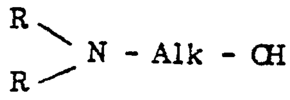

wherein R is an alkyl group having from 1-6 carbon atoms and Alk is an alkylene group having 2-6 carbon atoms and said alkanolamine is employed in a sufficient amount to form a salt with the acid groups present in said polyamide.

13. A process as defined in claim 13 wherein said polyamide is present in an amount of up to about 35% by weight in said aqueous solution.

14. A process as defined in claim 14 in which said polyamide is present in an amount of about 20% by weight of said aqueous solution.

15. A process as defined in claim 13 in which said alkylaminoalkanolamine is a mixture of N-N-dimethylethanolamine and N,N-diethylethanolamine.

16. A process as defined in claim 13 in which said aqueous solution containing said alkylaminoalkanol amine is comprised by weight of about 77% water, about 22% N,N-diethylethanolamine and about 1% N,N-dimethylethanolamine.

17. A process for adhesively bonding substrates comprising

(a) dissolving in an aqueous solution containing a dialkylaminoalkanolamine in which the alkyl group contains from about 1-6 carbon atoms and the alkanol group contains from 2-6 carbon atoms, a thermoplastic polymeric fat acid polyamide hot melt adhesive having an acid value from at least about 10 and which exceeds the amine value of said polyamide resin;

(b) bonding said aqueous solution containing said adhesive to at least one of the substrates to be bonded thereby providing a first substrate having an applied wet film thereon;

(c) removing the water from said wet film to provide a substantially clear, dry film of said adhesive on said substrate;

(d) activating said adhesive by heating to a temperature sufficient to melt said adhesive on said first substrate; and

(e) contacting said first substrate containing said melted film to a second substrate thereby bonding said substrates together on cooling of the melted adhesive below the melting point of said adhesive.

18. A process as defined in claim 18 wherein said dialkylaminoalkanolamine is selected from the group consisting of N,N-dimethylethanolamine, N,N-diethylethanolamine and mixtures thereof.

19. A process as defined in claim 1 wherein polymeric fat acid polyamide concentration by weight in said aqueous solution containing said dialkylaminoalkanolamine is up to about 35%.

European Patent Office

# EUROPEAN SEARCH REPORT

Application Number

EP 88 10 9716

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 7, no. 277 (C-199)[1422], 9th December 1983; & JP-A-58 154 724 (FUJI KASEI KOGYO K.K.) 14-09-1983<br>* Abstract * | 1-8 | C 08 J 3/04<br>C 08 G 69/48<br>C 09 J 3/00<br>C 09 D 3/00 |
| A | DE-A-1 719 192 (SHERING AG)<br>* Claims * | 1-8 | |
| A | FR-A-1 521 724 (GENERAL MILLS)<br>* Abstract * | 1,9 | |
| A | EP-A-0 126 998 (UNION CAMP CORP.)<br>* Claims * | 1-8 | |
| A | US-A-4 072 641 (KRAFTCO CORP.)<br>* Claims * | 1-19 | |
| A | US-A-3 143 528 (F. GRANT CO.)<br>* Claims * | 1-19 | |
| | | | TECHNICAL FIELDS SEARCHED (Int. Cl.4) |
| | | | C 08 J<br>C 08 G |

The present search report has been drawn up for all claims

| Place of search | Date of completion of the search | Examiner |
|---|---|---|
| THE HAGUE | 09-09-1988 | GLANDDIER A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document